# EUROPÄISCHE PATENTSCHRIFT

(11) **EP 1 395 505 B1**
(45) Veröffentlichungstag und Bekanntmachung des Hinweises auf die Patenterteilung: **07.03.2007**
(21) Anmeldenummer: 02732731.1
(22) Anmeldetag: 22.05.2002
(51) Int. Cl.: B65G 15/34, B29D 29/06, B32B 37/00

(54) **FÖRDERGURT MIT KUNSTSTOFFBESCHICHTUNG**
CONVEYOR BELT WITH PLASTIC COVERING
COURROIE DE TRANSPORT A REVETEMENT EN MATIERE PLASTIQUE

(30) Priorität: 23.05.2001 DE 10125541
(43) Veröffentlichungstag der Anmeldung: 10.03.2004
(73) Patentinhaber: ContiTech Transportbandsysteme GmbH, 30165 Hannover (DE)
(72) Erfinder: KERWEL, Wolfgang, 31515 Wunstorf (DE); KÜPPERS, Hans, 47807 Krefeld (DE); ZIEBARTH, Meinhold, 37154 Northeim (DE)
(74) Vertreter: Finger, Karsten
(86) Internationale Anmeldenummer: PCT/EP2002/005581
(87) Internationale Veröffentlichungsnummer: WO 2002/094692

(56) Entgegenhaltungen:
- EP-A- 0 472 436
- DE-A- 1 729 001
- DE-A- 2 822 141
- FR-A- 1 567 289
- FR-A- 2 210 251
- GB-A- 917 277
- GB-A- 1 097 034
- GB-A- 1 402 275
- US-A- 3 650 874
- US-A- 4 334 468
- US-A- 5 746 302
- US-A- 5 792 513

## Beschreibung

Die Erfindung betrifft einen Fördergurt mit Kunststoffbeschichtiing.

Bei Fördergurten ist man bestrebt, Anbackungen und Verschmutzungen an Fördergurten während des Transportes der unterschiedlichsten Güter, insbesondere Massengüter, zu verhindern.

Der Einsatz mechanischer Reinigungssysteme für Fördergurte ist bekannt. Z. B. gibt es Gurtabstreifer, die insbesondere im Bereich der Umlenkrollen angebracht sind.
Der Nächteil solcher Gurtabstreifer besteht darin, dass ein Anbacken zunächst nicht verhindert wird und dass während des Abstreifvorganges durch den Direktkontakt von Abstreifer und Gummideckplatte ein vorzeitiger Deckplattenverschleiß verursacht wird.

Weil Gurtabstreifer sich als unbefriedigend erwiesen haben, ist vorgeschlagen worden, Fördergurte mit schmutzabweisenden Deckschichten zu versehen. Zu diesem Zweck wird gemäß DDR-Patent 23 01 192 der Gummimischung von Fördergurt-Deckschichten niedermolekulares Polyethylen in unterschiedlicher Dosierung beigemischt. Durch einen solchen anti-adhäsiven Zusatz in dem Deckplattengummi hat man eine insgesamt anti-adhäsive Wirkung erhofft. Da es sich aber lediglich um eine Mischung mit einem gewissen Prozentsatz anti-adhäsiver Beigabe handelt, ist die anti-adhäsive Wirkung insgesamt bedeutend geringer als bei einer rein anti-adhäsiven Beschichtung.

Die JP 9085900-A offenbart ebenfalls einen Fördergurt mit Festigkeitsträger, Elastomerdeckplatten und einer tragseitigen Antihaflbeschichtung aus UHMW-Polyethylen. Die JP 9085900-A offenbart keine - bei Verzicht auf laufseitige Deckplatten - laufseitig angeordnete Gewebegleitlage.

Fördergurte mit Kunststoff-Beschichtung sind an sich ebenfalls bekannt.

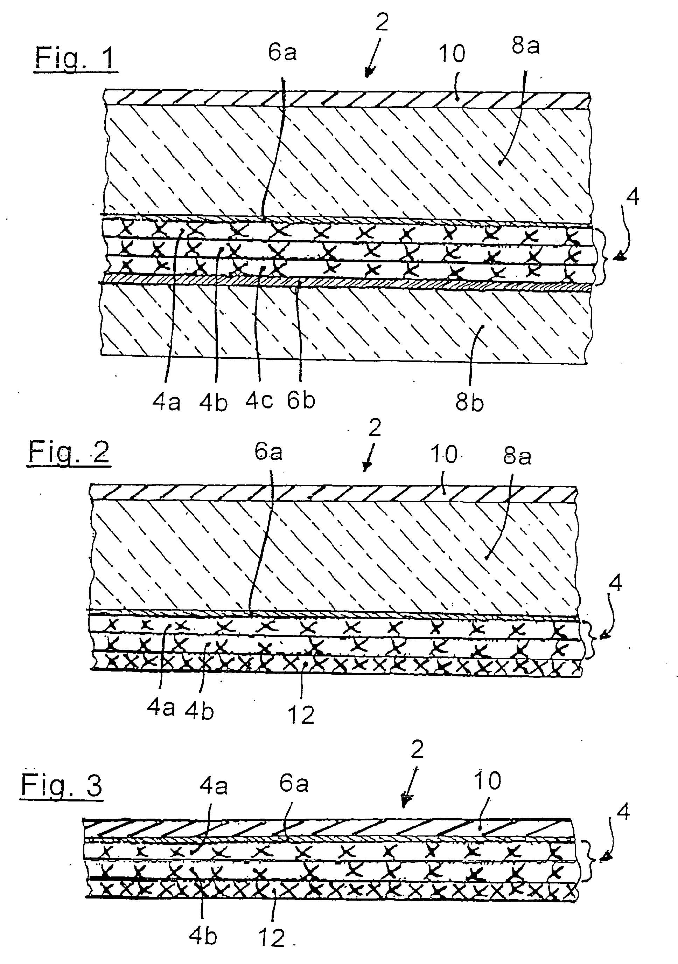

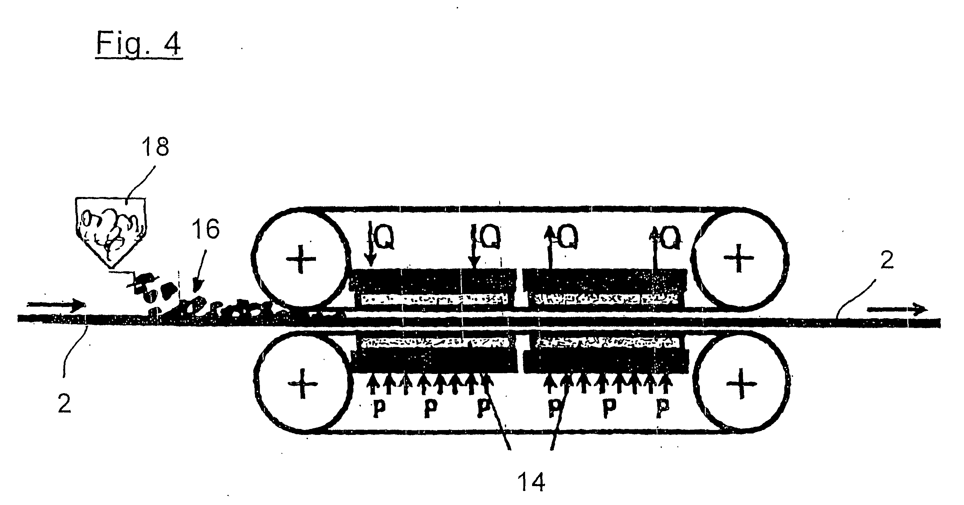

Die DE-OS 22 51 180 beschreibt einen Bandförderer, dessen Oberfläche eine Beschichtung von Polyethylen oder Polytetrafluorethylen aufweist. Das auch unter der Bezeichnung "Teflon" auf dem Markt befindliche Polytetrafluorethylen hat zwar bekanntermaßen eine anti-adhäsive Wirkung. Es hat sich aber eine unzureichende Biegewilligkeit des mit Polytetrafluorethylen beschichteten Bandförderers herausgestellt. Um eine solche Biegewilligkeit zu realisieren, wurde es erforderlich, die Polytetrafluorethylenschicht des Bandförderers mit Querrillen (Einschnitten) zu versehen (Fig. 3). Zudem ergab sich ein "Schüsseleffekt", was außer Querrillen zusätzlich auch Längsrillen erforderlich machte (Fig. 4). Wegen der Quer- und Längsrillen ist die Antihaftwirkung verlorengegangen.

Gemäß DE-OS 28 22 141 wird das Gewebeband eines Transportbandes mit Fluorkunststoff-Folie beklebt. Das Klebeverfahren ist höchst kompliziert. Die Festigkeit der Klebebefestigung lässt zu wünschen übrig. Für einen rauhen Einsatz ist die beschriebene Klebebefestigung ungeeignet.

Gemäß der Aufgabe, die zur vorliegenden Erfindung geführt hat, soll ein Fördergurt mit einer praxis-tauglichen, strapazierfähigen und dauerhaften Antihaft-Oberfläche bereitgestellt werden, der preisgünstig, leicht und biegewillig ist und gleichzeitig eine hohe Lebensdauer durch geschützte Festigkeitsträgerlagen und gute Gleiteigenschaften aufweist.

Gelöst wird die Aufgabe durch einen Fördergurt mit den Merkmalen des Anspruchs 1.

Vorteilhafte Ausgestaltungen der Erfindung sind Gegenstand der Unteransprüche.

Die in Anspruch 1 genannte Antihaftbeschichtung besitzt eine selbstreinigende Wirkung (abweisend), so dass ein Einsatz von Abstreifern nicht mehr notwendig ist. Die Antihaftbeschichtung der Fördergurte hat sich bei den verschiedensten, zu befördernden Gütern als vorteilhaft erwiesen.

In praktisch durchgeführten Versuchen hat sich herausgestellt, dass eine Beschichtung aus hochmolekularem Polyethylen (PE) nicht nur eine hervorragende Antihaftwirkung sondern auch eine ausreichende Biegewilligkeit aufweist.

Außerdem hat die Beschichtung eine bessere Abriebfestigkeit als der Deckplattengummi, so dass eine Materialstärke von 0,1 mm bis 0,3 mm auch fiir starke Belastungen völlig ausreichend ist.
Wegen der Abriebfestigkeit der PE-Beschichtung kann zumindest tragseitig auf dicke Gummideckplatten verzichtet werden. Durch einen solchen Verzicht auf tragseitige Deckplatten wird die Biegewilligkeit des Gurtes erhöht.

Die Antihaftwirkung des PE-Materials wird durch eine ultra-glatte Oberfläche unterstützt.

Ein Vulkanisationsverfahren zur Herstellung des Fördergurtes, bei dem die Fertigung zunächst in bekannter Weise durchgeführt wird: Gewebe -> Kalanderverfahren (skimmen und decken) und dann vor dem Vulkanisieren des Fördergurtes eine Polyethylenfolie auf die tragseitigen Deckplatten aufgebracht und dann zusammen mit dem Gurt kontinuierlich öder diskontinuierlich vulkanisiert wird, garantiert eine dauerhaft feste Haftung der PE-Folie auf der Gummi-Unterlage.

Ist zudem die Dehnfähigkeit der Antihaft-Beschichtung der Dehnfähigkeit der Festigkeitsträgerlagen angepasst, so wird der sonst gefürchtete "Schüsseleffekt" vermieden.

Für Fördergurte, die in erhöhtem Maße zu Anbackungen neigen, hat sich eine Reinigungsbürste als vorteilhaft erwiesen. Eine derartige Reinigungsbürste ist effizient, verursacht aber kernen zusätzlichen Verschleiß der Gurt-Oberfläche.

Die Antihaftbeschichtung führt zu einer Reduzierung der Reinigungskosten. Dadurch, dass sich ein Einsatz von Abstreifern erübrigt, ergibt sich eine Reduzierung der Anschaffungskosten und eine Verlängerung der Standzeiten. Auf der Antihaftbeschichtung des Fördergurtes können sich Bakterien und andere Krankheitskeime nicht dauerhaft ansiedeln. Damit reduziert sich das Krankheitsrisiko z. B. in der Recycling-Industrie und in Kompost-Werken.

Die Erprobung hat gezeigt, dass Fördergurte mit der Antihaftbeschichtung in den verschiedensten Anwendungsbereichen, z. B. beim Recycling, bei der Kompostierung und in der Kalksandstein-Industrie vorteilhaft einsetzbar sind.

Die Herstellung der erfindungsgemäßen Gurte erfolgt zunächst in bekannter Weise, d. h.: Gewebe -> Kalanderverfahren (skimmen und decken).

Vor dem Vulkanisieren des Fördergurtes wird eine.Polyethylenfolie, die ca. 0,2 mm dick ist, entweder in einer Bahn oder überlappend (zwei Folienbreiten) auf die unvulkanisierte Deckplatte aufgebracht und dann während der Vulkanisation des Gummis mit diesem verschweißt.

Hierbei ist im besonderen die Heiztemperatur bzw. die Vulkanisatiönszeit zu berücksichtigen, damit eine einwandfreie Verschweißung zur Deckplatte gewährleistet ist und ein Auswandern von Bestandteilen aus der Gummimischung durch die Folie verhindert wird.

Das Fertigprodukt ist ein Gummi-Fördergurt mit antiadhäsiven, öl- und chemikalienbeständigen Eigenschaften. Aufgebaut aus einer Karkasse aus mehreren Gewebelagen oder Stahlseilen mit einer Gummierung auf der Basis von Natur-, SBR- oder EPDM-Kautschuk, deren tragseitige Deckplatte durch die Kunststoffbeschichtung antiadhäsiv, verschleißfest und ölbeständig geworden ist.

Die Kunststoffbeschichtung basiert vorzugsweise auf einer UHMW-Polyethylen-Folie von 0,1 bis 0,5 mm Stärke und wird mit dem Grundkörper durch den Vulkanisationsprozess homogen haftend verbunden.

Die Kunststoff-Beschichtung erzeugt:
1. Ölbeständigkeit, die sonst nur durch Verwendung von Gummideckplatten auf Basis des wesentlich teureren Nitril- oder Chloropren-Kautschuks erreicht wird. Jetzt kann auch ein Gurtaufbau aus den nicht ölbeständigen Kautschuken dauerhaft gegen Öleinwirkung geschützt werden.
2. Antiadhäsive Eigenschaften, die dazu führen, dass feuchte Fördergüter, wie z. B. Gips, Lehm oder Titandioxid nicht mehr anhaften. Durch diesen Effekt kann auf Abstreifer entweder ganz verzichtet werden oder diese durch wesentlich schonendere Bürsten oder Gummileisten ersetzt werden. Während normale Gummifördergurte durch die stark wirkenden Abstreifsysteme schnell verschleißen, hat der beschichtete Gurt diese nicht nötig und erleidet damit auch keinen Verschleiß.
3. Verschleißfestigkeit/Standzeit des Fördergurtes:
   Bedingt dadurch, dass das UHMW-Polyethylen abriebfester, schlag- und kerbzäher ist als die Gummideckplatten, wird in der Praxis die Lebensdauer deutlich verlängert, selbst bei einer Reduzierung der bisherigen Gummideckplattendicke.

Verschiedene Vergleichs- und Ausführurigsbeispiele der Erfindung sind in den Zeichnungen dargestellt und in der nachfolgenden Beschreibung näher erläutert. Es zeigt die Fig. 1 ein Vergleichsbeispiel und die Figuren 2 und 3 erfindungsgemäße Fördergurte, ausschnittsweise und jeweils in Längs- oder Querschnitt.
Fig. 4 stellt ein Herstellungsprinzip für beschichtete Fördergurte dar.

Der in Fig. 1 dargestellte Fördergurt 2 weist einen Festigkeitsträger 4 auf, der aus drei Lagen 4a, 4b, 4c eines EP-Gewebes besteht, das beidseitig geskimmt ist (Gummierung 6a, 6b). Als Festigkeitsträger 4 können auch Stahlseile zum Einsatz gelangen.
Trag- und laufseitig ist der beidseitig gummierte Festigkeitsträger 4 mit Deckplatten 8a, 8b belegt. Auf die tragseitigen Deckplatten 8a ist eine Polyethylenbeschichtung 10 aufvulkanisiert.
Die aufzubringende PE-Folie 10 ist 0,2 mm dick und wird in Bahnen aufgetragen. Die Folie 10 kann auch in zwei oder mehreren, sich überlappenden Bahnen aufgetragen werden.

Bei der in Fig. 2 dargestellten erfindungsgemäßen Ausführungsform besteht der Grundaufbau des Fördergurtes 2 aus zwei Lagen 4a, 4b eines Festigkeitsträgers 4.
Auf seiner Unterseite, d. h. laufseitig, ist der Festigkeitsträger 4 mit einer Gewebegleitlage 12 abgedeckt. Auf eine bei Fördergurten sonst übliche laufseitige Deckplatte wird hier verzichtet.
Die Oberseite des Festigkeitsträgers 4 ist gummiert (Gummierung 6a). Auf dem tragseitig gummierten Festigkeitsträger 4 befinden sich übliche Deckplatten 8a.

In analoger Weise zu der in Fig. 1 dargestellten Ausführungsform ist auch hier auf die tragseitigen Deckplatten 4 eine Polyethylenfolie 10 aufvulkanisiert.
Auch hier ist die aufzubringende PE-Folie 10 0,2 mm dick und wird in Bahnen aufgetragen. Auch hier kann die Folie 10 in zwei oder mehreren, sich überlappenden Bahnen aufgetragen werden.

Die Fig. 3 zeigt eine weitere Abwandlung der Erfindung. Der Grundaufbau des Fördergurtes 2 entspricht dem in Fig. 2 dargestellten, d. h. er besteht aus zwei Lagen 4a, 4b eines Festigkeitsträgers 4. Auf seiner laufseitigen Unterseite ist der Festigkeitsträger 4 - wie gemäß Fig. 2 - mit einer Gewebegleitlage 12 versehen. Tragseitig ist der Festigkeitsträger 4 gummiert (Gummierung 6a). Im Unterschied zu den Ausführungsformen gemäß Fig. 1, und Fig. 2 ist hier direkt auf die tragseitige Gummierung eine Polyethylenfolie 10 aufvulkanisiert.

Die Fig. 4 demonstriert ein Verfahren zur Pulverbeschichtung von Fördergurten 2. Vor dem Einlauf in eine Doppelbandpresse (Doppelbandanlage) 14 wird auf den Rohling des Fördergurtes 2 oder einen fertig vulkanisierten Fördergurt 2 ein Kunststoff Pulver 16 aufgestreut. Das Pulver 16 besteht aus ultrahochmolekularem Polyethylen (UHMW-PE) und kann durch Ruß antistatisch eingestellt sein.
Zum Aufstreuen des Pulvers 16 auf den Fördergurt 2 kann man sich eines handelsüblichen Streuers 18 bedienen. Ein mit Nadelwalze bestückte Streueinrichtung 18 hat sich dabei als besonders gut geeignet erwiesen. Die aufgestreute Menge sollte ca. 100 bis 500 g/m² betragen.
In der Doppelbandanlage 14 wird das Pulver 16 durch geeignete Temperatur und geeigneten Druck zu einem Film gesintert oder verschmolzen und verbindet sich gleichzeitig haftend mit dem Gummi des Fördergurtes 2. In der Prinzipskizze geben die Zeichen ↓Q, ↓Q eine Heizzone (Temperatur ca. 150°C) und die Zeichen ↑Q, ↑Q eine Kühlzone an. Die Zeichen ↑P, ↑P, ... symbolisieren "isobaren Betrieb". Nach Verlassen der Doppelbandpresse 14 hat man einen beschichteten, vulkanisierten Gurt 2.

### Bezugszeichenliste

- 2: Fördergurt, Gurt
- 4: Festigkeitsträger
- 4a, 4b, 4c: Festigkeitsträgerlagen, Gewebelagen
- 6a, 6b: Gummierung
- 8a, 8b: Deckplatten
- 8a: tragseitige Deckplatte(n)
- 8b: laufseitige Deckplatte(n)
- 10: Kunststoffschicht, Antihaftbeschichtung, Folie, Polyethylenfolie
- 12: Gewebegleitlage
- 14: Doppelbandpresse, Doppelbandanlage
- 16: Kunststoff-Pulver, Polyethylen-Pulver
- 18: Streuer, Streueinrichtung
- ↓Q: Heizzone
- ↑Q: Kühlzone
- ↑P, ↑P,...: isobarer Druck

## Patentansprüche

1. Fördergurt (2),
mit einem aus mindestens einer Festigkeitsträgerlage (4a, 4b, 4c) ausgebauten Festigkeitsträger (4), der aus Gewebe oder Cord besteht, wobei der Festigkeitsträger auf der Tragseite gummiert (6a) ist,
wobei die gummierte tragseitige Oberfläche mit einer Kunststoffschicht (10) als Antihaftbeschichtung versehen ist, die aus ultrahochmolekularem Polyethylen (UHMW-PE) besteht, **dadurch gekennzeichnet, dass** der Fördergurt auf der laufseitigen Lage (4b) eine Gewebegleitlage (12) aufweist.

2. Fördergurt nach Anspruch 1,
**dadurch gekennzeichnet,**
**dass** zwischen der gummierten Tragseite (6a) des Festigkeitsträgers (4) und der Kunststoffschicht (10) eine Deckplatte (8a) angeordnet ist, die aus Elastomer oder einer Kautschukmischungbesteht.

3. Fördergurt nach einem der Ansprüche 1 oder 2,
**dadurch gekennzeichnet,**
**dass** die Antihaftbeschichtung (10) eine Dicke von 0,1 mm bis 0,3 mm aufweist.

4. Fördergurt nach einem der Ansprüche 1 bis 3,
**dadurch gekennzeichnet,**
**dass** die Antihaftbeschichtung (10) aufvulkanisiert ist.

5. Fördergurt nach einem der Ansprüche 1 bis 4,
**dadurch gekennzeichnet,**
**dass** die Dehnfähigkeit der Antihaftbeschichtung (10) der Dehnfähigkeit des Festigkeitsträgers (4) angepasst oder mit ihr vergleichbar ist.

## Claims

1. Conveyor belt (2), with a reinforcement (4) made up of at least one reinforcement layer (4a, 4b, 4c) and consisting of woven fabric or cord, the reinforcement being rubber-covered (6a) on the supporting side, the rubber-covered surface on the supporting side being provided with a layer of plastic (10) as a non-stick covering, which consists of ultrahigh molecular weight polyethylene (UHMW-PE), **characterized in that** the conveyor belt has a sliding fabric layer (12) on the layer (4b) on the running side.

2. Conveyor belt according to Claim 1, **characterized in that** a top sheet (8a) which consists of elastomer or a rubber mixture is arranged between the rubber-covered supporting side (6a) of the reinforcement (4) and the layer of plastic (10).

3. Conveyor belt according to either of Claims 1 and 2, **characterized in that** the non-stick covering (10) has a thickness of 0.1 mm to 0.3 mm.

4. Conveyor belt according to one of Claims 1 to 3, **characterized in that** the non-stick covering (10) is vulcanized on.

5. Conveyor belt according to one of Claims 1 to 4, **characterized in that** the extensibility of the non-stick covering (10) is adapted to or comparable with the extensibility of the reinforcement (4).

## Revendications

1. Courroie de transport (2), qui présente un renfort (4) constitué d'au moins une couche (4a, 4b, 4c) de renfort constituée d'un tissu ou de câbles, le renfort étant caoutchouté (6a) sur le côté porteur, la surface caoutchoutée située du côté porteur étant dotée d'une couche (10) de matière synthétique qui sert de revêtement antiadhésif et constituée de polyéthylène à poids moléculaire ultra-élevé (UHMW-PE), **caractérisée en ce que** sur son côté de déplacement (4b), la courroie de transport présente une couche coulissante (12) en tissu.

2. Courroie de transport selon la revendication 1, **caractérisée en ce qu'**une plaque de recouvrement (8a) constituée d'un élastomère ou d'un mélange de caoutchoucs est disposée entre le côté porteur caoutchouté (6a) du renfort (4) et la couche (10) de matière synthétique.

3. Courroie de transport selon l'une des revendications 1 ou 2, **caractérisée en ce que** le revêtement antiadhésif (10) présente une épaisseur comprise entre 0,1 mm et 0,3 mm.

4. Courroie de transport selon l'une des revendications 1 à 3, **caractérisée en ce que** le revêtement antiadhésif (10) est vulcanisé.

5. Courroie de transport selon l'une des revendications 1 à 4, **caractérisée en ce que** l'extensibilité du revêtement antiadhésif (10) est adaptée à l'extensibilité du renfort (4) ou lui est comparable.
